# EUROPEAN PATENT APPLICATION

(11) **EP 1 557 769 A1**
(43) Date of publication of application: **27.07.2005**
(21) Application number: 04023225.8
(22) Date of filing: 29.09.2004
(51) Int. Cl.: G06F 17/30, H04L 29/06, H04L 29/08

(54) **Server system, method and program for transmitting contents**

(30) Priority: 22.01.2004 JP 2004014877
(71) Applicant: Dwango Co., Ltd., Tokyo 103-0007 (JP)
(72) Inventor: Kawakami, Nobuo, c/o Dwango Co., Ltd., Tokyo 103-0007 (JP); Sato, Daiki, c/o Dwango Co., Ltd., Tokyo 103-0007 (JP)
(74) Representative: Betten & Resch

(57) **Abstract**

Providing content, such as a favorite ringing melody of user, to a mobile terminal by only accessing a server system via a mobile terminal without manipulation by the user. A user of the mobile phone registers a profile, including the artist whom the user likes, in the web server in advance. An application of the mobile phone is automatically activated every update time interval to access the web server. The web server reads out a ringing melody of the user's favorite artist from a database that contains a favorite ringing melody set of the user obtained from the user profile of the mobile phone, according to a request for downloading contents from the mobile phone, and transmits it to the mobile phone.

## Description

### BACKGROUND OF THE INVENTION

### 1. Field of the Invention

The present invention relates to a server system, a method for transmitting content, and a program that provide playable content such as voices, images and music, such as ringing melodies, to a mobile terminal, such as a mobile phone, through a network, such as the Internet.

### 2. Description of the Related Art

In general, when a mobile phone receives mail or an incoming call, a desired melody that is registered in advance is played. These days, as the technologies related to mobile phones advances, it is common for moving images, as well as music, to be played when receiving an incoming call.

Sound content, such as ringing melodies, voices and/or music from a CD sound source or image content, such as still images and moving images, can be down loaded as content information from a server connected to the Internet through a mobile network.

A content provider provides such content information to be downloaded. To subscribe to the service, a user registers with a content provider having content information of a desired artist and accesses the content provider's web site to obtain desired information.

For either sound content or image content, a process of searching for the desired content in connection with related information, such as an artist name, is conducted on a web screen using HTTP of the mobile phone. When the searching process finds the desired content, the user performs an operation to download the content. Through such a process, the content is downloaded to the user's mobile phone.

### SUMMARY OF THE INVENTION

The present invention has been achieved in view of drawbacks inherent in the prior arts. According to the prior art, a searching process is required such that users typically access a content provider's web site to find the desired content on the site through button control. However, after finding a favorite artist, the same searching process is again required every time a user attempts to download a ringing melody of a song by the same artist. For this reason, it is not a user-friendly system.

Further, the server performs a series of downloading processes including the searching process rather inflexibly, such that when the user attempts to download a ringing melody of only the latest song by the same artist, a lengthy communication with the user' s mobile phone is usually required. As a result, the phone use charges the user has to pay are increased due to the inefficient communication.

An object of the present invention is to provide a server system, a method of transmitting content, and a program which provides the content such as a favorite ringing melody of the user, by only accessing the server system from a mobile terminal without manipulation of the user side so as to improve the efficiency of the communication.

To solve the foregoing problems and obtain the afore-mentioned object, according to an aspect of the present invention, a server system communicates with a mobile terminal through a network. The server system includes a content storage device that stores content information by relating the content information to an attribute of the content information; a profile storage device that stores user specific information by relating the profile information that contains the attribute of the content information, arbitrarily set to each user; a reader that reads the profile information that corresponds to the user specific information with reference to the profile storage device based on access from the mobile terminal; a content determiner that determines content information that corresponds to the attribute contained in the profile information read from the reader; and a transmitter that reads the determined content information from the content storage to transmit the content information to the mobile terminal.

Further, according to another aspect of the present invention, a server system communicates with amobile terminal through a network. The mobile terminal may activate content based on time. The mobile terminal includes a storage device that stores content information by relating the content information to an attribute of the content information; a profile storage device that stores user specific information by relating the user specific information to profile information that contains the attribute of content information, arbitrarily set to each user; a reader that reads the profile information that corresponds to the user specific information with reference to the profile storage device based on an access from the mobile terminal; a content determiner that determines a plurality of content information that corresponds to the attribute contained in the profile information read from the reader; a set data generator that reads, from the content storage device, the plurality of content information determined by the content determiner and generates a set data that makes the plurality of read content information correspond to information that represents a time for the content information to be effectively activated for the mobile terminal; and a transmitter that transmits the set data generated from the set data generation means to the mobile terminal.

Further, the server system may further include a device that sets profile information stored into the profile storage device based on an access from the mobile terminal.

A method for transmitting content to a mobile terminal through a network is disclosed, comprising storing, into a first memory, user specific information by relating the user specific information profile information that contains an attribute of content information, arbitrarily set to each user, and reading the profile information that corresponds to the user specific information with reference to the memory based on an access from the mobile terminal; determining content information that corresponds to the attribute contained in a read profile information; and storing, into a second memory, content information corresponding to the attribute of the contents information, and reading the determined content information to be transmitted to the mobile terminal.

Further, a method is disclosed for transmitting content to a mobile terminal through a network, the mobile terminal being capable of activating content based on time. The method includes storing, into a first memory, user specific information by relating the user specific information to profile information that contains an attribute of content information, arbitrarily set to each user, and reading profile information that corresponds to the user specific information with reference to the memory based on an access from the mobile terminal; determining a plurality of content information that corresponds to the attribute contained in the read profile information; storing, into a second memory, content information corresponding to the attribute of the content information, and reading from the second memory a plurality of determined content information; setting the plurality of read determined content information to correspond to information that represents a time for each content information to be effectively activated for the mobile terminal; and transmitting the set data to the mobile terminal.

The method of the present invention further comprises setting profile information stored into the first memory based on an access from the mobile terminal.

Further, the method of the present invention may further comprise setting profile information stored into the first memory based on the access from the mobile terminal.

According to another object of the present invention, a program executes a process for transmitting content to a mobile terminal through a network, using a computer of a server, by storing, into a first memory, user specific information by relating the user specific information to profile information that contains an attribute of content information, arbitrarily set to each user, and reading the profile information that corresponds to the user specific information with reference to the memory based on an access from the mobile terminal; determining the content information that corresponds to the attribute contained in read profile information; and storing, into a second memory, content information corresponding to the attribute of the content information, and reading the determined content information to transmit it to the mobile terminal.

Further, a program according to the present invention executes a process for transmitting content to a mobile terminal capable of activating the content based on time, through a network, by using a computer of a server. The program stores, into a first memory, user specific information by relating the user specific information to profile information that contains an attribute of content information, arbitrarily set to each user, and reading the profile information that corresponds to the user specific information with reference to the memory based on access from the mobile terminal; determines aplurality of content information that corresponds to the attribute contained in the read profile information; stores, into a second memory, content information by relating the content information to the attribute of the contents information, and reading from the second memory a plurality of determined content information; setting the read plurality of content information to correspond to information that represents a time for each content information to be effectively activated for the mobile terminal; and transmits the set data to the mobile terminal.

Further, the server computer executable program may further set profile information stored into the first memory based on the access from the mobile terminal.

According to the embodiments of the present invention, content such as a ringing melody favorable to the user, is supplied from the mobile terminal to the server system without manipulation of the user side, so that communication efficiency can be improved.

### BRIEF DESCRIPTION OF THE DRAWINGS

FIG. 1 is a schematic diagram illustrating a network according to an embodiment of the present invention;
FIG. 2 is a block diagram showing an exemplary arrangement of a web server according to the embodiment of the present invention;
FIG. 3 is a diagram showing an exemplary arrangement of a data base according to the embodiment of the present invention;
FIG. 4 is a block diagram showing an example of a ringing melody set data according to the embodiment of the present invention;
FIG. 5 is a diagram illustrating content of a member record table according to the embodiment of the present invention;
FIG. 6 is a diagram illustrating content of a profile record table according to the embodiment of the present invention;
FIG. 7 is a diagram illustrating content of an artist record table according to the embodiment of the present invention;
FIG. 8 is a diagram illustrating content of a set record table according to an embodiment of the present invention;
FIG. 9 is a diagram illustrating an exemplary arrangement of a mobile phone according to the embodiment of the present invention;
FIG. 10 is a flowchart illustrating an operation between a mobile phone and a web server in registering a member according to the embodiment of the present invention;
FIG. 11 illustrates a screen transition of a mobile phone side in registering a member according to the embodiment of the present invention;
FIG. 12 is a flowchart illustrating an operation between a mobile phone and a web server in downloading a ringing melody set according to the embodiment of the present invention;
FIG. 13 is a diagram illustrating a screen for setting an update time interval of a ringing melody set in a mobile phone according to the embodiment of the present invention;
FIG. 14 is a flowchart illustrating an operation for setting an update time interval of a ringing melody set in a mobile phone according to the embodiment of the present invention; and
FIG. 15 is a flow chart illustrating an operation of changing a ringing melody in a mobile phone according to the embodiment of the present invention.

### DETAILED DESCRIPTION OF THE INVENTION

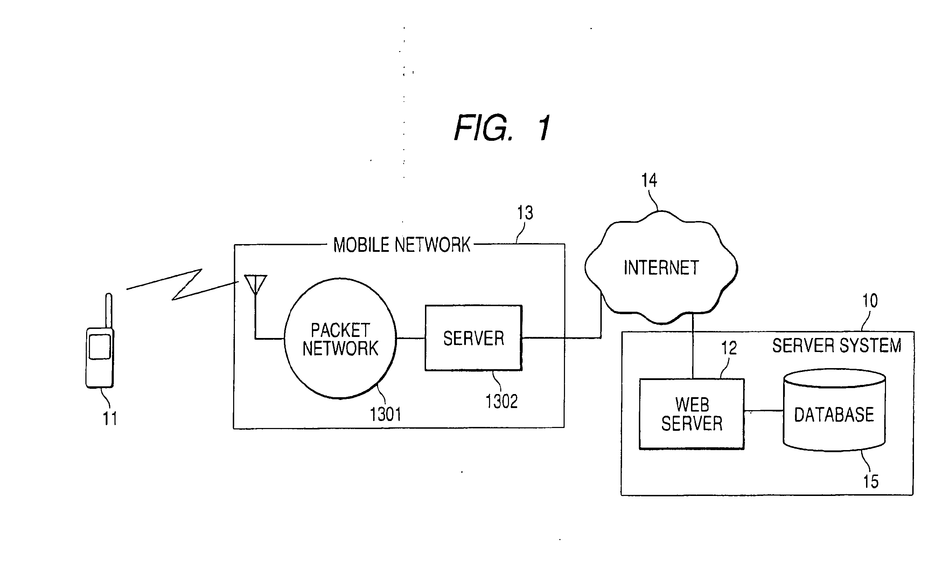

An exemplary embodiment of the present invention will now be described with reference to the drawings. The entire arrangement of the embodiment will be explained. FIG. 1 is a schematic diagram illustrating a network according to an embodiment of the present invention. In FIG. 1, the network system according to an embodiment of the present invention comprises a mobile terminal such as a mobile phone 11, a mobile network 13, an internet 14 and a server system 10.

The mobile network 13 is a communication system for the mobile terminal, such as the mobile phone 11, to connect to the internet 14, and comprises a packet network 1301 and a gate server 1302. The packet network 1301 is connected to a base station (not shown) which communicates with the mobile terminal 11 and outputs data to the gate server 1302. Packet data received from the gate server 1302 is sent to the base station.

The server system 10 comprises, for example, a web server 12 and a database 15 that stores content data, such as, but not limited to, for example, ringing melodies. The server system 10 provides permissible web pages to the mobile terminal that attempts to access the web pages through the mobile network 13 or the internet 14, or provides various types of other services. As an example, the server system 10 can provide content such as ringing melodies to a mobile phone member.

The mobile phone 11 is an example of a plurality of mobile phones, having a telephone function for voice communication and a browser function for internet communication. For the internet communication, Hyper Text Transfer Protocol (HTTP), a protocol for transmitting and receiving data with the web server 12 , is used . The web server 12 is a representative example of a plurality of web servers, implementing a site that provides permission to read a web page according to a request from the mobile terminal, such as the mobile phone 11, and provides services to download playable digital content, such as music, voices and/or images to the mobile phone when receiving an incoming call. In downloading the content, the web server 12 refers to the database 15.

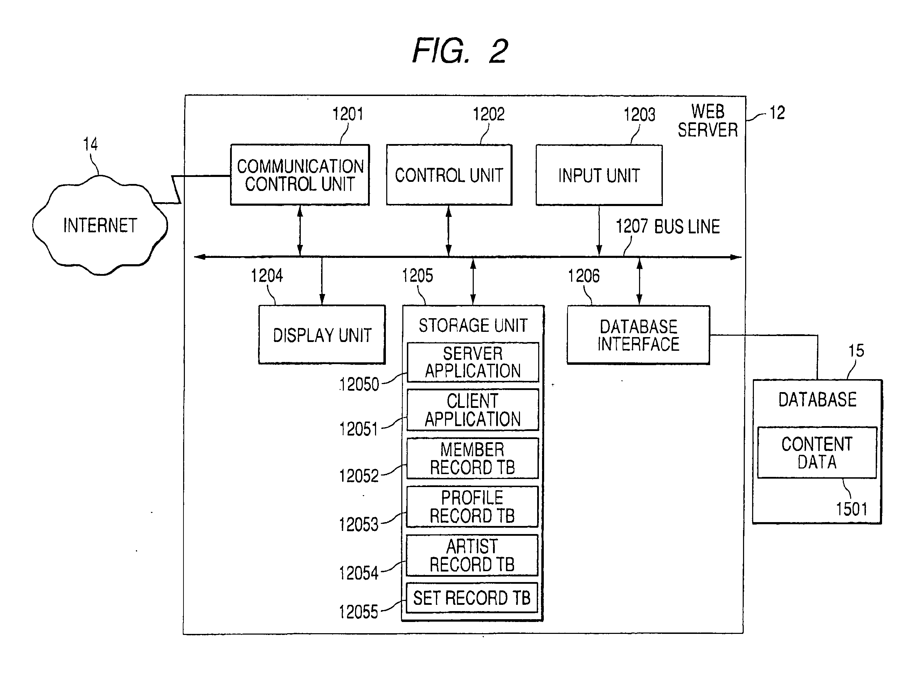

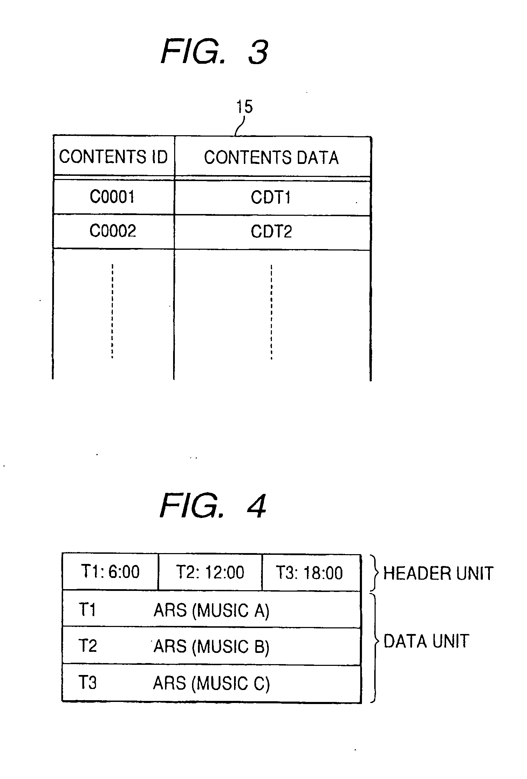

Next, the server system 10 will be described in more detail. FIG. 2 is a block diagram showing an exemplary arrangement of the web server 12 according to the embodiment of the present invention, and FIG. 3 is a diagram showing an exemplary arrangement of the database 15 according to the embodiment of the present invention. As shown in FIG. 2, the web server 12 connects a communication control unit 1201, a control unit 1202, an input unit 1203, a display unit 1204, a storage unit 1205, and a database interface 1206 to a bus line 1207, and transmits data, address signals and control signals, etc. to process them.

The communication control unit 1201 is connected to the internet 14, and is responsible for a bidirectional communication between the mobile phone 11 and other appliances, such as, for example, a personal computer through the internet 14. The control unit 1202 comprises a CPU, ROM, and RAM. The CPU controls the entire server, based on an operating system (OS) stored in the ROM. The input unit 1203 permits the input of a variety of information to the control unit 1202 for manually operating the server. The display unit 1204 displays a variety of states based on the manipulation of the server or operation of the server itself.

The storage unit 1205 stores an application program for the server (hereinafter, referred to as server application) 12050 that processes the server side to provide a web browser display, to the mobile phone 11, according to the embodiment of the present invention, and an application program for client (hereinafter, referred to as client application) 12051 that implements the web browser for a client, i . e . , the mobile phone 11 according to the embodiment of the present invention.

The storage unit 1205 further includes a member record table (TB) 12052 that contains information onmembers, aprofile record TB 12053 that associates content information with favorites of a member, an artist record TB 12054 that associates each artist with content, and a set record table 12055 that associates each artist to one set having a number of content.

The database interface 1206 connects the database 15 to the server. The database 15 stores content data 1501, such as ringing melodies or music from CD sound sources, images and/or voice and is responsible for reading or updating data.

As shown in FIG. 3, the database 15 includes a large-scale storage that stores content data corresponding to content ID, for example. For the ringing melody as an example of the content, content ID C0001 corresponds to ringing melody data CDT1. Likewise, content ID C0002 corresponds to ringing melody data CDT2. Although not shown and illustrated, the database 15 further stores music data from CD sound sources, still images, moving images and voice data, each of which corresponds to the contents ID.

With the above arrangement, when a request to download is received from the mobile terminal, such as the mobile phone 11, through the internet 14, the control unit 1202 provides ringing melodies, music from CD sound source, voices, andimages, such as moving images and still images, based on the member's favorite stored in the storage unit 1205.

According to the embodiment of the present invention, the contents of an artist may be provided to the mobile terminal as a set. To simplify the following explanation, ringing melodies are illustrated as an exemplary example of the contents. In this case, the content provided to the mobile terminal, such as the mobile phone 11, employs a format, for example, as shown in FIG. 4. FIG. 4 shows an example of a ringing melody set data.

In other words, ringing melodies transmitted to the mobile terminal are, for example, three pieces of music by the same artist, which is referred to as an "ringing melody set". This ringing melody set comprises, for example, a header unit and a data unit, as shown in FIG. 4. The header unit comprises three types of activation time information T1, T2 and T3 that represent potential activation times, and the data unit stores three pieces of ringing melodies corresponding to the activation time information T1 to T3 in the header unit.

In FIG. 4, three pieces of ringing melodies are included named after an artist name, e. g. , "ARS." It is shown that music A corresponds to activation time information T1 (6:00), music B corresponds to activation time information T2 (12:00), and music C corresponds to activation time information T3 (18: 00) ,

Further, although described below in more detail, when a profile, that represents that some user of the mobile phone 11 likes an artist with the name of "ARS", is registered into the web server 12 in advance, such as in setting profiles, the mobile phone 11 can automatically be activated to access the web server 12 for downloading the ringing melody set.

The web server 12 retrieves the user profile of the mobile phone 11 with reference to the profile record TB 12053 in the storage unit 1205, according to an access based on the automatic activation from the mobile phone 11. Whentheprofileisdetected, the ringing melody set corresponding to the artist "ARS" is acquired with reference to the above profile and is transmitted to the mobile phone 11.

When the ringing melody set is downloaded to the mobile phone 11, three pieces of ringing melodies constituting the ringing melody set can be set according to an activation time information of the header unit in the mobile phone 11. In this case, each setting of three pieces of ringingmelodies is changed according to the activation time information.

For the music A of "ARS," 6:00 is set according to the activation time information of the header unit. As a result, when it is 6 o'clock at the mobile phone, music A is set as a ringing melody. Further, for the music B of "ARS," 12:00 is set according to the activation time information of the header unit. As a result, when it is 12 o'clock at the mobile phone, the set music is changed from music A to music B, and music B is set as a ringing melody. Further, for the music C of "ARS," 18:00 is set according to the activation time information of the header unit. As a result, when it is 18 o'clock at the mobile phone, the set music is changed from music B to e music C, and the music C is set as a ringing melody.

As such, in the mobile phone 11, the ringing melody set can be automatically downloaded at the time set by the user, and the activation time of the downloaded ringing melody set can be automatically changed according to the activation time information of the header unit.

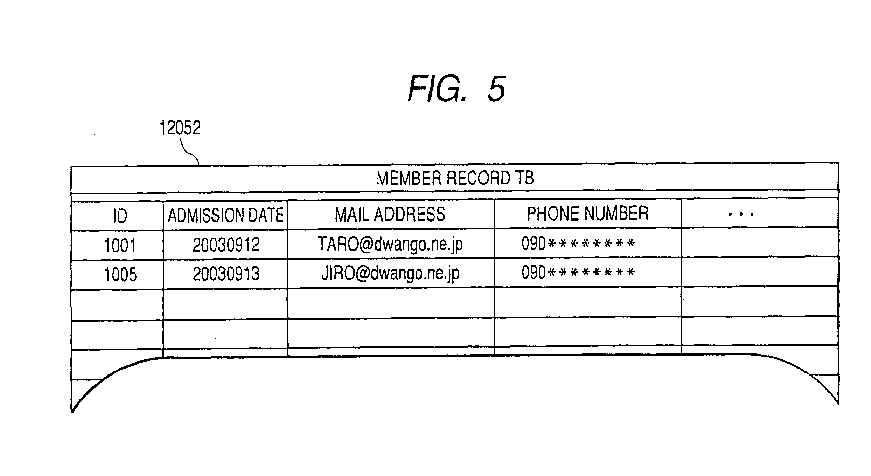

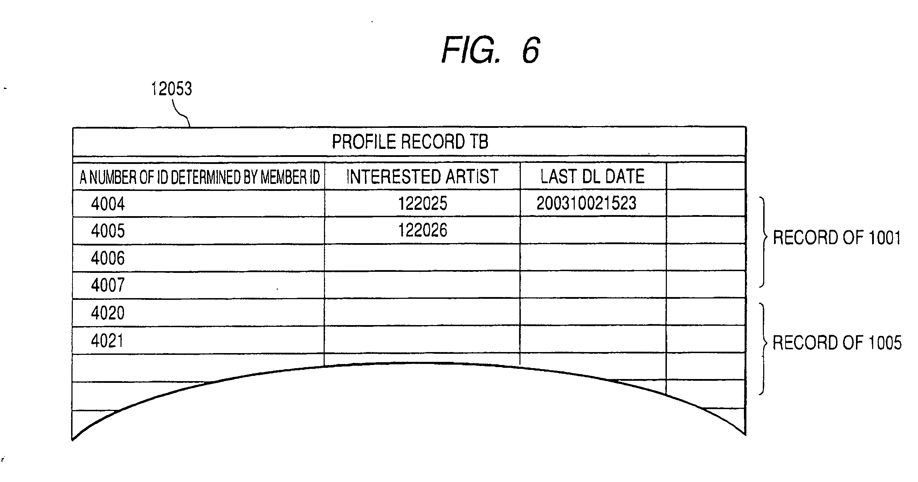

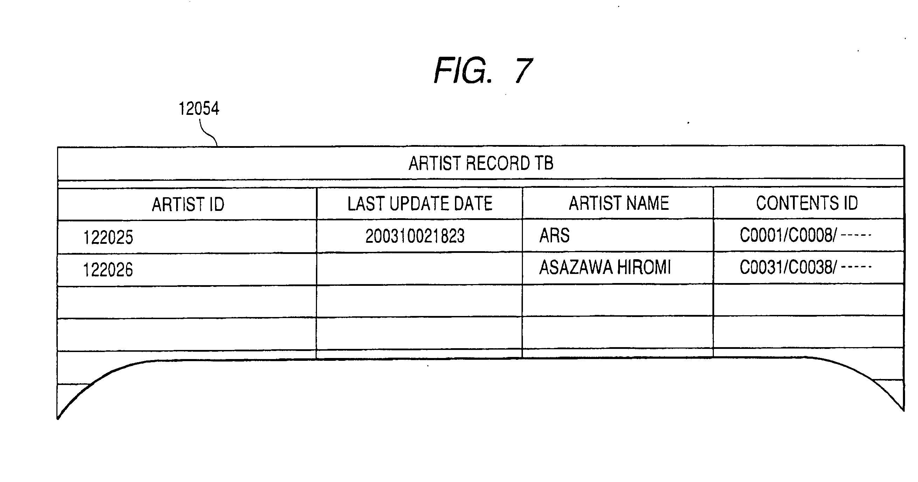

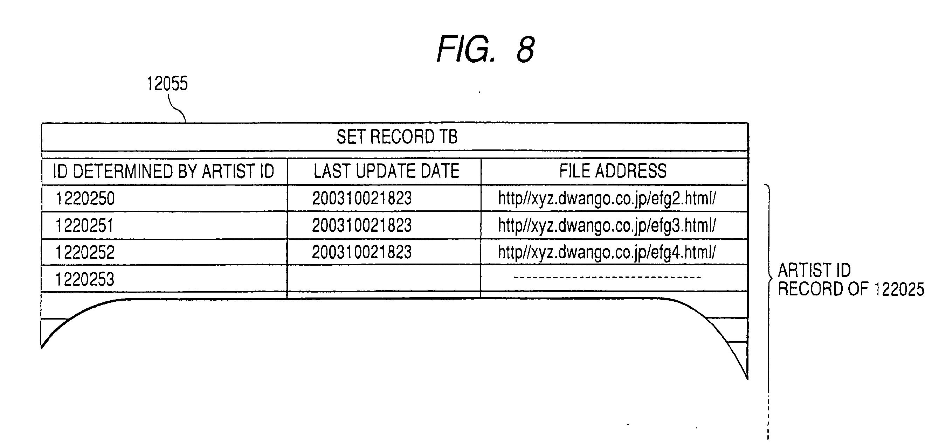

Each record table shown in FIG. 2 will now be described in more detail. FIG. 5 is a diagram illustrating content of a member record table according to the embodiment of the present invention; FIG. 6 is a diagram illustrating content of a profile record table according to the embodiment of the present invention; FIG. 7 is a diagram illustrating content of an artist record table according to the embodiment of the present invention; and FIG. 8 is a diagram illustrating content of a set record table according to the embodiment of the present invention.

In the member record TB 12052 (see FIG. 5), for every user desiring to register, member information comprising a "MEMBER ID, " an "ADMISSION DATE," a "MAIL ADDRESS" and a "PHONE NUMBER" is registered. In the example of FIG. 5, member information for member ID "1001" is "September 12, 2003" for the admission date, TARO@dwango.ne.jp for the mail address, and "090********" for the phone number. Member information for member ID "1002" is "September 13, 2003" for the admission date, JIRO@dwango.ne.jp for the mail address, and "090********" for the phone number.

In the profile record TB 12053 (see FIG. 6), a profile for every member, such as, for example, "A NUMBER OF ID DETERMINED BY MEMBER ID, " an "INTERESTED ARTIST," and "LAST DL DATE" is registered. The relationship between the member and the artist in whom the member is interested can be obtained through this table. According to the embodiment of the present invention, four records are given to each member, so that four different types of artists can be registered.

For profile record table 12053, four records, such as "4004," "4005," "4006" and "4007" are given to the user whose member ID is "1001." In FIG. 6, since member ID "1001" is interested in two different artists, artist IDs "122026" and "122029" are recorded in IDs 4004 and 4005.

Further, in the "last downloading date" field of the profile record TB 12053, the last date when the user downloads the ringing melody set to the mobile phone 11 is registered. Therefore, for member ID "1001," the last DL date when the ringing melody set for artist ID "122025: is downloaded is recorded as "200310021523, which represents October 2, 2003, 15:23.

In the artist record table 12054 (see FIG. 7) , information for a "LAST UPDATE DATE" field, an "ARTIST NAME" field and a "CONTENTSID" field are registered corresponding to the "ARTIST ID." By way of example, for artist ID "122025, " the last update date is October 2, 2003, 18:23, the artist name is "ARS," and the contents ID corresponds to ringing melody set "C0001" and "C0008."

In the set record table 12055 (see FIG. 8) , information for an "ID DETERMINED BY ARTIST ID" field, a "LAST UPDATE DATE," field and a "FILE ADDRESS" field is registered for each artist ID. In the "FILE ADDRESS" field, uniform resource locator (URL) is registered that represents a location where the ringing melody set is stored. For example, the URL representing the location where the ringing melody set designated by the artist "1220250" with the name of "ARS" is stored is http//xyz.dwango.co.jp/efg2.html/. The data when the ringing melody set is updated last is recorded in "LAST UPDATE DATE." In FIG.8, the last update date of the ringing melody set designated by "1220250," is October 2, 2003, at 18:23.

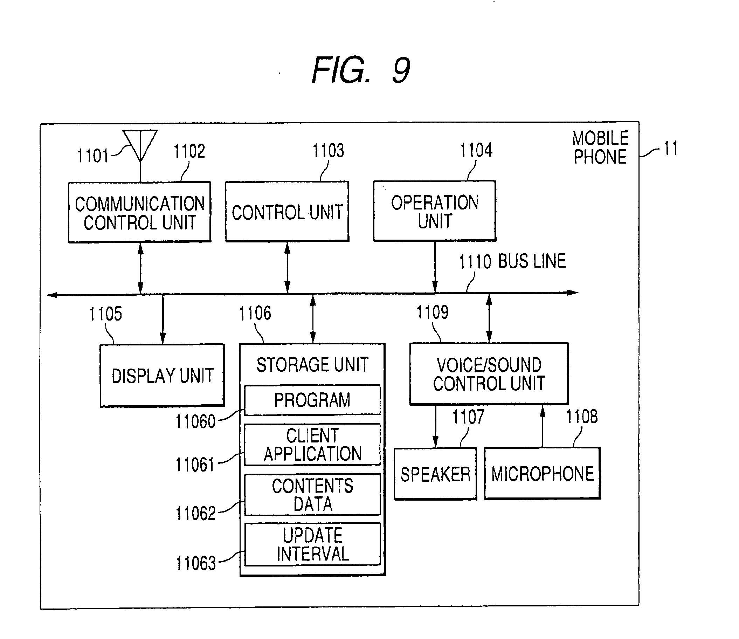

Next, the mobile phone 11 now be described in more detail. FIG. 9 is a diagram illustrating an exemplary arrangement of the mobile phone according to an embodiment of the present invention. The mobile phone 11 comprises, for example, an antenna 1101, a communication control unit 1102, a control unit 1103, an operation unit 1104, a display unit 1105, a storage unit 1106, and a voice/sound control unit 1109 as shown in FIG. 9 that are converted to a bus line 1110 inside the mobile phone 11, which functions to transmit address signals, data signals and control signals between the various units. The communication control unit 1102 is additionally connected to the antenna 1101, and communicates with the mobile network 13 through the antenna 1101. A voice communication or communication with the web server 12 can be implemented with communication control unit 1102.

Control unit 1103 comprising a CPU, a ROM and a RAM and controls the overall mobile phone 11 according to a program 11060 stored in the storage unit 1106. The storage unit 1106 stores a client application 11061 that is downloaded from the web server 12. The client application 11061 includes an application that can perform processes such as web browsing, ringing melody set down loading and registration, and conversion of the ringing melody based on the activation time information. The web browsing is executed by JAVA (trademark) application, which is a web browser.

Further, control unit 1103 receives an input from the operation unit 1104 to perform various processing, and control the display conforming to each processing. In particular, according to the embodiment of the present invention, a program for automatically downloading the ringing melody set can be stored. However, this can be implemented either as a program to store in advance or one function in the client application 11061.

Control unit 1103 automatically downloads the ringing melody set based on the client application 11061. In other words, when the user, in advance, sets a time to download the ringing melody set, when the set time arrives in an internal timer of the mobile phone 11, the control unit 1103 accesses the web server 12 and downloads the ringing melody set. While the ringing melody is illustrated herein, other content, such as music and images stored in the database 15 are applied in the same manner.

Storage unit 1106 stores content data 11062, such as, for example, the downloaded ringing melody set, and an update time interval 11063 that represents a condition to automatically download and update the ringing melody set, in addition to a program 11060 and a client application 11061.

Operation unit 1104 comprises keys for inputting a phone number, mail address, etc., through various key manipulations, keys for determining or selecting functions and power supply buttons. Display unit 1105 displays, for example, a browser or a screen when using the phone or mail function, or displays contents such as still images or moving images. The voice/sound control unit 1109 is connected to a speaker 1107 for outputting voice and music contents, such as ringing melodies, and to microphone 1108 for inputting a voice, and processes the voice in the incoming/outgoing call.

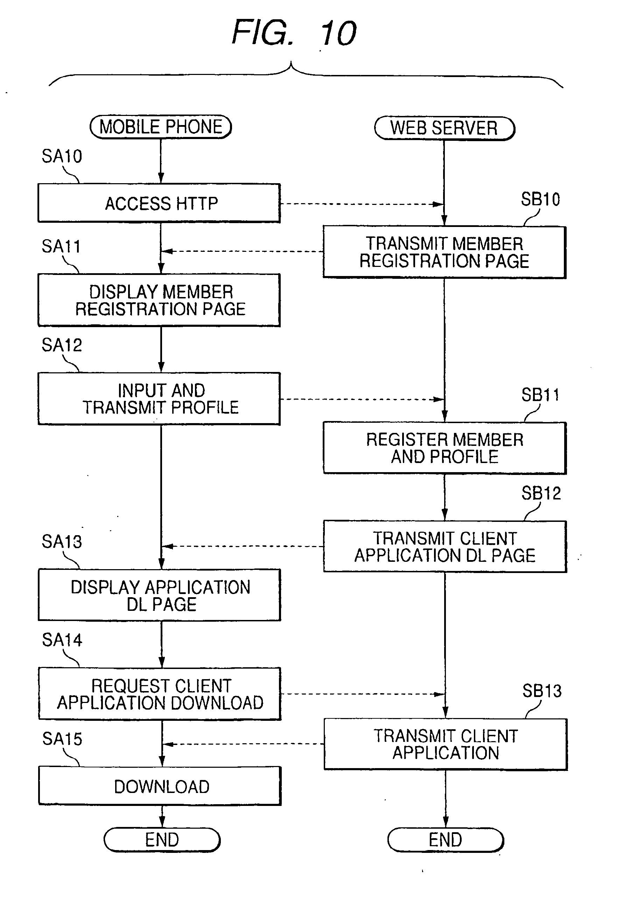

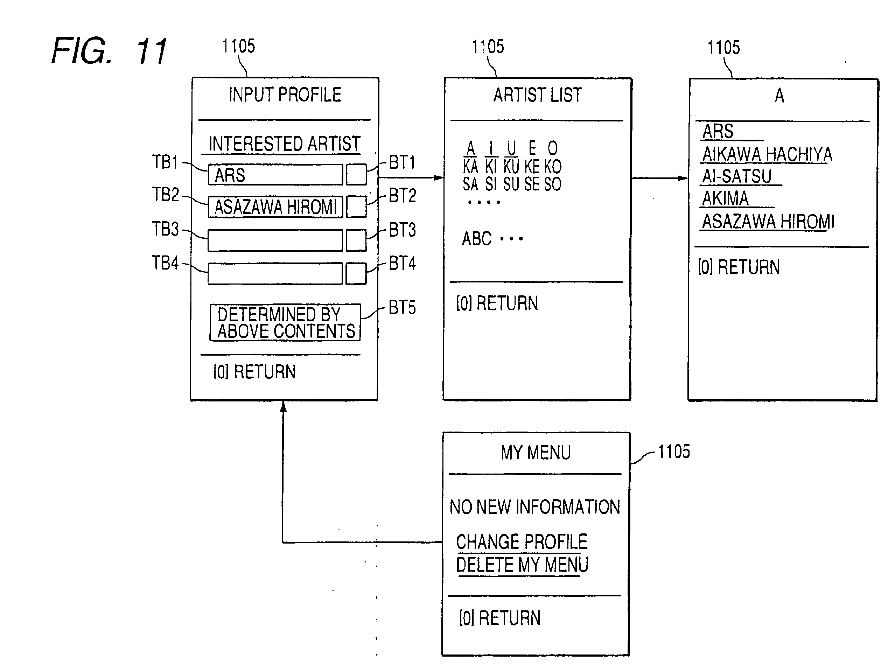

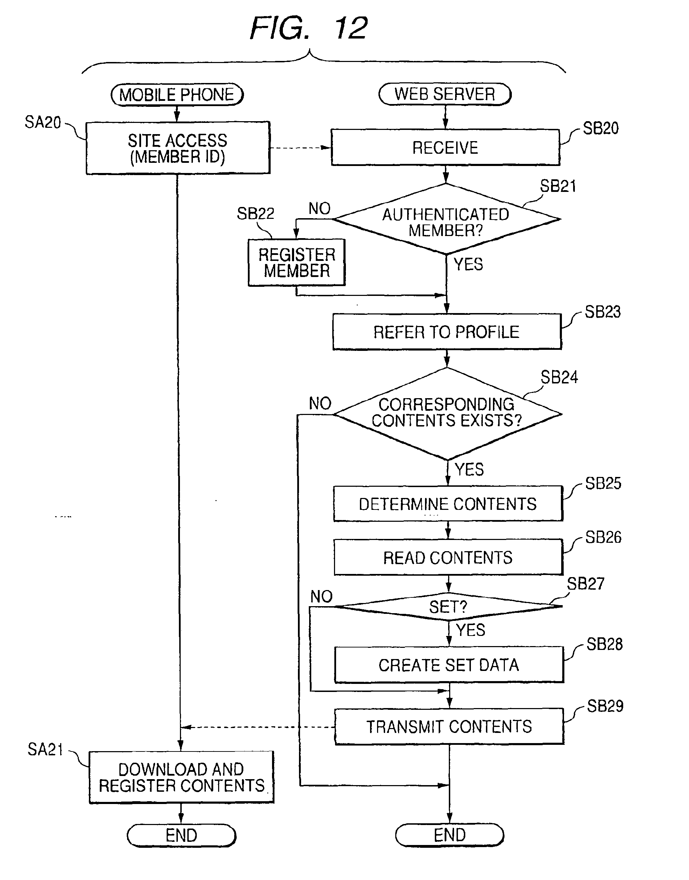

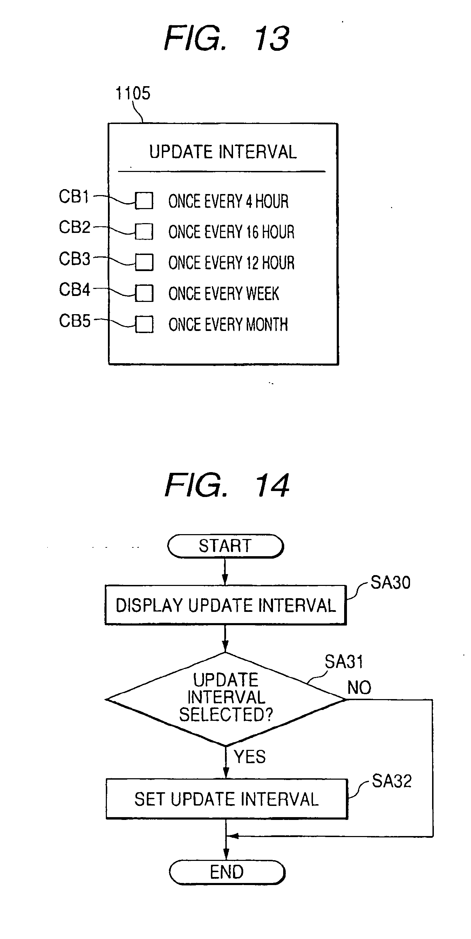

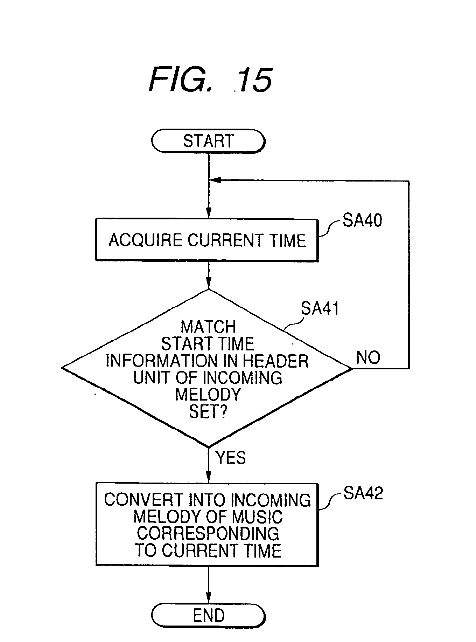

Next, an operation of the embodiment of the present invention will be described. FIG. 10 is a flowchart for illustrating the operation between the mobile phone 11 and the web server 12 to register a member. FIG. 11 is a flowchart illustrating a screen transition of the mobile phone 11 side in registering the member. FIG. 12 is a flowchart illustrating operation between the mobile phone 11 and the web server 12 in downloading a ringing melody set. FIG. 13 is a diagram illustrating a screen for setting the update time interval of a ringing melody set in the mobile phone 11. FIG. 14 is a flowchart illustrating the operation of setting an update time interval of a ringing melody set in the mobile phone 11. FIG. 15 is a flowchart illustrating the operation for changing a ringing melody in the mobile phone 11.

First, the operation for registering a member will be described with reference to FIG. 10. Assume that the user is not yet registered as a member. In FIG. 10, when the program of the mobile phone 11 is activated by a manipulation of the user, an access is performed from the mobile phone 11 to the web server 12 through the mobile network 13 and the internet 14, using HTTP (step SA10). In step SA10, the member registration is requested from the web server 12 by the mobile phone 11.

In the web server 12, a member registration page is filled in through the access from the mobile phone 11, and is transmitted to the mobile phone 11 using HTTP (step SB10). In the mobile phone 11, the member registration page received from the web server 12 is displayed on the screen (step SA11). In the mobile phone 11, profiles are inputted in response to the manipulation by the user over the member registration page displayed on the screen (step SA12).

The profiles are inputted as shown in FIG. 11, for example. In other words, the artist name is inputted into text boxes TB1 to TB4 of the profile input screen. In this case, four types of artist names can be inputted. Likewise, when more than five text boxes are provided, more than five artist names can be inputted. When the artist name is not known, a radio button BT is provided next to the right of the text box TB. By pressing the radio button BT, the artist name can be retrieved in a Japanese alphabet, hiragana order (such as in the order of a, i, u, e and o) or in an alphabetical order.

Here, when 'a' (in Japanese alphabet, hiragana order) is selected, the artist names whose initial is 'a' are displayed. In FIG. 11, there are shown "ARS, " "AIKAWAHACHIYA, " "AI-SATUS, " "AKIMA," and "ASAZAWA HIROMI." Further, when the artist to look for is selected among them, the selected artist name is inputted into the text button TB that corresponds to the pressed radio button BT. For example, when the radio button BT1 is pressed to select "ARS, " "ARS" is inputted into the text button TB1. When the radio button BT5 indicated as "DETERMINED BY ABOVE CONTENTS" is pressed after one to four artist names are inputted, the inputted artist names are stored. Further, the profiles, i.e., the artist names already inputted can be converted later.

Referring back to FIG. 10, the user inputs the profiles with reference to the member registration page displayed in the screen of the mobile phone 11, and the inputted profiles are transmitted using HTTP through the key manipulation by the user in the program of the mobile phone 11 (step SA12). In the web server 12, each of the member information and profile information is registered into the member record TB 12052 and the profile record RB 12053, based on the profiles received from the mobile telephone 11 (step SB11).

In other words, for example, "1001" for the "MEMBER ID" field, "20030912" for the admission date field, TARO@dwango.ne.jp for the mail address field, and "090********" in input section for the phone number field are registered in the member record TB 12052, as shown in FIG. 5.

Likewise, for example, "4004" for "A NUMBER OF ID DETERMINED BY MEMBER ID" field and "122025" for an "INTERESTED ARTIST" field are registered in the profile record TB 12053, as shown in FIG. 6. In this case, the "LAST DL DATE" field is empty. This is because the ringing melody set has not yet been down loaded at the time of the member registration while "200310021523" is shown in FIG. 6. When the ringing melody set is downloaded after the member is registered, the downloaded date is registered in the "LAST DL DATE" field.

Further, in the artist record TB 12054, for example, as shown in FIG. 7. "122025" and "122026" are registered in the "artist ID" field, "200310021823" is registered in the "LAST UPDATE DATE" field, and "ARS" and "ASAZAWA HIROMI" are registered in the "ARTIST NAME" field. In this case, the artist ID "122025" corresponds to "ARS" and the artist ID "122026" corresponds to "ASAZAWA HIROMI". Further, the date when the management site lastly updates the ringing melody set of each artist is registered in the "LAST UPDATE DATE" field.

In the set record table 12055, for example, "1220250," "1220251," "1220252" and "1220253" are registered in the "ID DETERMINED BY ARTIST ID" field, "200310021823" is registered for the ID determined by artist ID in the "LAST UPDATE DATE" field, and a stored address of the ringing melody set of each artist is registered in the "FILE ADDRESS" field, as shown in FIG. 8. The last date when the management site lastly updates the ringing melody set of each artist is registered in the "LAST UPDATE DATE" field. Further, for the member registration at step SB11, a structured query language (SQL) is employed for dealing with the database.

When the member and profile registration processing is completed (step SB11), in the web server 12, an application download page is transmitted using HTTP (step SB12). The application download page received from the web server 12 is displayed on the screen of the mobile phone 11 (step SA13). The application down load is required through the key manipulation by the user according to the application download page displayed on the screen of the mobile phone 11 (step SA14).

In the web server 12, the client application is transmitted according to the request from the mobile phone 11 (step SB13) . Activated at the time designated in the mobile phone 11 by the client application to check the file update status, the ringing melody set file is downloaded and stored to activate at the set time, and the activation time is changed according to the ringing melody. In the mobile phone 11, the processing is performed such that the client application is downloaded from the web server 12 and stored into the memory to be executable (step SA15).

Next, the operation for downloading the ringing melody set will be described with reference to FIG. 12. Functions of determining admission and setting profiles in the web server 12 are also described herein. First, when a request to access the web server 12 from the mobile phone 11 is made, if there is a member ID, the member ID is transmitted (step SA20). In the web server 12, when the access request is received from the mobile phone 11 (step SB20) , if the member ID is transmitted from the mobile phone 11, it is determined whether the member ID exists with reference to the member record table 12052, or whether the member ID is transmitted from the mobile phone 11 (step SB21).

Through the member authentication in the step SB21, when it is determined that the member ID is not registered (NO route in step SB23), member registration processing is performed (step SB22) as described in FIG. 10. Processing then proceeds to step SB23. On the other hand, when it is determined that the member ID is registered ("YES" in step SB23) , the processing directly proceeds to the step SB23.

Further, the profile record TB 12053 is referred to (step SB23), and based on whether the contents ID exists, it is determined whether there exists the ringing melody of the artist the user likes according to the member ID (step SB24). When the ringing melody exists, the ringing melody to transmit to the mobile phone 11 is determined (step SB25), and the ringing melody data of the corresponding contents ID is retrieved from the database 15 (step SB26). Further, when the corresponding contents do not exist in the step SB24, the processing is ended.

Here, it is determined whether there is a ringing melody set corresponding to the site designated by the address of the set file in the set record TB 12055 (step SB27), and if there is a set, the ringing melody set is generated as set data, as shown in FIG. 4 (step SB28). The contents data (such as set data) is transmitted from the web server 12 to the mobile phone 11 (step SB29).

In the mobile phone 11, the ringing melody data only, or the ringing melody set, , are transmitted from the web server 12, the download processing and the registration processing are performed (step SA21).

An automatic update of the ringing melody by the mobile phone 11 will now be described with reference to FIGS. 13 and 14. In the mobile phone 11, the client application 11061 downloaded from the web server 12 is executed, so that the update time interval of the ringing melody can be set.

When the user activates the client application 11061, the screen for setting the update time interval can be displayed, as shown in FIG. 13. In the example of FIG. 13, the setting of the update time interval can be selected from one of "ONCE EVERY 4 HOUR, " "ONCE EVERY 6 HOUR, " "ONCE EVERY 12 HOUR, " "ONCE EVERY WEEK" and "ONCE EVERY MONTH," to each of which check boxes CB1 to CB5 are provided. The desired update time interval can be set through the input manipulation of these check boxes.

Referring to FIG. 14, when the user sets the update time interval of the ringing melody set in the mobile phone 11, the screen for setting the update time interval shown in FIG. 13 is displayed (step SA30). In addition, after the screen for setting the update time interval is displayed, it is determined whether there has been an input to select an update time interval by the user (step SA31), and if the selection of the update time interval has been made, the selected update time interval is set (step SA32).

For example, when check box CB3 for "ONCE EVERY 12 HOUR" is selected, this update time interval is set. As such, when the update time interval is set, the process for downloading the ringing melody is set to every 12 hour and is automatically performed. The mobile phone 11 can automatically download the ringing melody set every update time interval set by the user. On the other hand, when the selection of the update time interval has not been made, the automatic update is not performed, so that the user should manually download the contents such as the ringing melodies.

Next, the operation for converting the ringing melody will be described with reference to FIG. 15. Here, it is assumed that the mobile phone 11 downloads the ringing melody set and obtains setting time information included in the header unit of the ringing melody set.

In FIG. 15, for the mobile phone 11, a current time is first obtained (step SA40). The mobile phone 11 has an embedded system clock, and time is acquired from the system clock according to an embodiment of the present invention. Here, when the application has a function to measure time, the measured time can also be used.

Further, it is determined whether the current time obtained from the system clock matches any one of the setting times of the activation time information stored in the header unit of the ringing melody set (step SA41). In this determination, when the current time does not match any of the setting times of the set time information included in the header unit of the ringing melody set ("NO" in step SA41), the processing returns to the step SA40. On the other hand, when the current time matches any of the setting times, the ringing melody corresponding to the matching setting time of the activation time information is set to a ringing melody to be used from thereafter (step SA42).

Here, when the ringing melody has already been set, processing to convert the already-set ringing melody to the current ringing melody is conducted, and when the ringing melody has not yet been set, the ringing melody of music corresponding to the current time is newly set.

For example, when the ringing melody set is configured such that the download completion time for the artist music shown in FIG. 4 is 5:00, music A is set as a ringing melody at the time of 6: 00 by the clock of the mobile phone 11. Later, when it is 12:00, through the transition from music A to the music B, music B is set to a ringing melody. Further, when it is 18:00, through the transition from music B to music C, music C is set to a ringing melody. As illustrated, the mobile phone 11 can convert three pieces of ringing melodies of the downloaded incoming set according to the setting time of the set time information in the header unit of the ringing melody set.

According to the web server system 10, in the embodiment of the present invention, a user of the mobile phone 11 registers artists whom the user likes into the web server 12 in advance, so that the application of the mobile phone 11 is automatically activated every updated time interval set by the user to access the web server 12 for downloading the ringing melody set. The web server 12 uses the database 15 to retrieve the profile of the user of the mobile phone 11 according to an access from the mobile phone 11, and when there is a profile of the user of the mobile phone 11, the ringing melody set of the artist the user like can be obtained from this profile.

After the mobile phone 11 downloads the ringing melody set, when it is 6:00, music A is set to the ringing melody, and when it is 12:00, music B is set to the ringing melody, and when it is 18:00, music C is set to the ringing melody among the ringingmelody set, e.g., among three pieces of ringing melodies, according to the activation time information in the header unit of the ringing melody set. As such, the mobile phone 11 automatically downloads the ringing melody set every update time interval set by the user, and three pieces of ringing melodies of the downloaded ringing melody set are converted according to the set time information in the header unit of the ringing melody set.

Therefore, the contents such as the ringing melodies playable in the mobile phone 11 can be acquired at any timing irrespective of the intent of the user possessing the mobile phone 11, and with this, the content such as the ringing melodies can be widespread. In addition, once the web server is informed of the favorite artist name, the contents related to the artist will be automatically downloaded later, so that it is needless to manually perform a downloading operation while checking the update state.

As described above, according to an embodiment of the present invention, a ringing melody favorable to the user interest and without any burden of manipulation can be provided to the mobile phone only by accessing the mobile phone to the web server. Therefore, communication efficiency between the mobile phone and the web server is improved.

Further, many pieces of ringing melodies of the same artist can be downloaded as a package, like the ringing melody set, so that it is not required to repeat the same processing, i . e . , to access the web server every time and for every music, but is possible to perform an efficient download processing collectively. In addition, when the web server performs transmission in a package, if data is compressed before transmission, the download processing with even more efficient communication can be implemented. In this case, it is desirable that the application for decompressing the compressed data be installed in the mobile phone in advance.

In addition, the mobile phone can automatically access the web server to download the ringing melody based on the profile, so that a user can perform a download operation at any unsynchronized time the user likes. For this reason, the user has only to set download processing of the ringing melody and the downloading itself is not required, thereby simplifying operation and improving efficiency.

Further, while the embodiment of the present invention uses ringing melodies as playable melodies in receiving mail or a phone call in the mobile phone 11, the present invention is not limited hereto, and the contents may be music, such as a CD sound source, still images and animations or a combination thereof, with which the same effect can be obtained.

The present invention can be applied to the overall distribution system of the contents distributable to mobile terminals such as mobile phones.

## Claims

1. A server system that communicates with a mobile terminal through a network, comprising:
a content storage device that stores content information by relating the content to an attribute of the content information;
a profile storage device that stores user specific information by relating the user specific information profile information that contains the attribute of content information, arbitrarily set to each user;
a reader that reads said profile information that corresponds to the user specific information with reference to said profile storage device based on an access from the mobile terminal;
a content determiner that determines content information that corresponds to the attribute contained in the profile information read by said reader; and
a transmitter that reads the determined content information to transmit said content information to the mobile terminal.

2. A server system that communicates with a mobile terminal through a network, the mobile terminal being capable of activating content based on time, comprising:
a content storage device that stores content information by relating the content information to an attribute of the content information;
a profile storage device that stores user specific information by relating the user specific information to profile information that contains the attribute of content information, arbitrarily set to each user;
a reader that reads profile information corresponding to the user specific information with reference to the profile storage device based on an access from the mobile terminal;
a content determiner that determines a plurality of content information that corresponds to the attribute contained in the profile information read by the reader;
a set data generator that reads, from the content storage device, the plurality of content information determined by the content determiner and generates a set data that makes the plurality of read content information correspond to information that represents a time for the content information to be activated for the mobile terminal; and
a transmitter that transmits the set data generated from the set data generator to the mobile terminal.

3. The server system of claim 1 or 2, further comprising:
a setting device that sets the profile information stored in the profile storage device based on the access from the mobile terminal.

4. Amethod for transmitting content to a mobile terminal through a network, comprising:
storing, into a first memory, user specific information by relating the user specific information to profile information that contains an attribute of content information, arbitrarily set to each user, and reading the profile information that corresponds to the user specific information with reference to the memory, based on an access from the mobile terminal;
determining content information that corresponds to the attribute contained in the read profile information; and
storing, into a second memory, content information corresponding to the attribute of the content information, and reading the determined content information for transmission to the mobile terminal.

5. Amethod for transmitting content to a mobile terminal through a network, the mobile terminal being capable of activating the content based on time, comprising:
storing, into a first memory, user specific information by relating the user specific information to profile information that contains an attribute of content information, arbitrarily set to each user, and reading the profile information that corresponds to the user specific information with reference to the memory based on an access from the mobile terminal;
determining a plurality of content information that corresponds to the attribute contained in the read profile information;
storing, into a second memory, content information corresponding to the attribute of the content information, and reading from the second memory the determined plurality of content information;
setting the plurality of content information read from the second memory correspond to information that represents a time for each content information to be effectively activated for the mobile terminal; and
transmitting the set data to the mobile terminal.

6. The method of claim 4 or 5, further comprising:
setting profile information stored in the first memory based on the access from the mobile terminal.

7. A program that executes a process that transmits content to a mobile terminal through a network using a computer of a server, the program::
storing, into a first memory, user specific information by relating the user specific information to profile information that contains an attribute of content information, arbitrarily set to each user, and reading the profile information that corresponds to the user specific information with reference to the memory based on an access from the mobile terminal;
determining the content information that corresponds to the attribute contained in the read profile information; and
storing, into a second memory, content information corresponding to the attribute of the contents information, and reading the determined content information for transmission to the mobile terminal.

8. A program that executes a process that transmits content to a mobile terminal capable of activating the content based on time, through a network, using a computer of a server, the program:
storing, into a first memory, user specific information by relating the user specific information to profile information that contains an attribute of content information, arbitrarily set to each user, and reading the profile information that corresponds to the user specific information with reference to the memory based on an access from the mobile terminal;
determining a plurality of content information that corresponds to the attribute contained in the read profile information;
storing, into a second memory, content information by relating the content information to the attribute of the content information, and reading from the second memory the determined plurality of content information;
setting the plurality of content information read from the second memory correspond to information that represents a time for each content information to be effectively activated for the mobile terminal; and
transmitting the set data to the mobile terminal.

9. The program of claim 11, further comprising:
setting profile information stored in the first memory based on the access from the mobile terminal.
